# EUROPEAN PATENT SPECIFICATION

(11) **EP 3 004 708 B1**
(45) Date of publication and mention of the grant of the patent: **31.10.2018**
(21) Application number: 14738573.6
(22) Date of filing: 27.05.2014
(51) Int. Cl.: F16L 9/00, F16L 55/027, F15D 1/02

(54) **IMPROVEMENT TO MATERIAL FLOW**
VERBESSERUNG AN EINEM MATERIALSTROM
ÉCOULEMENT DE MATÉRIAU AMÉLIORÉ

(30) Priority: 24.05.2013 US 201361827311 P
(43) Date of publication of application: 13.04.2016
(73) Proprietor: Farrow, Nigel Richard, West Chester, Pennsylvania 19382 (US)
(72) Inventor: Farrow, Nigel Richard, West Chester, Pennsylvania 19382 (US)
(74) Representative: ip21 Ltd
(86) International application number: PCT/GB2014/051610
(87) International publication number: WO 2014/188223

(56) References cited:
- WO-A1-98/05872
- AT-B- 134 543
- DE-A1-102005 051 487
- DE-C- 597 472
- DE-U1- 20 211 331
- DE-U1-202007 005 418
- US-A- 1 451 272
- US-A- 1 662 178
- US-A- 3 313 577
- US-A- 3 719 207
- US-A- 4 314 587

## Description

### Field of the Invention

The present invention relates to an attachment to improve flow performance within a conduit. The attachment can be used to change the flows of solid, liquid and gaseous materials and can be inserted into the flow line leading to a nozzle.

### Background to the Invention

The subject of fluid flow is extremely important in a very large number of technical areas as it governs the movement of mass from one location to another. The problems which are associated with said movement can be, for example, to maximise the mass flow, reduce the abrasion between different particles within the flow or substituent members of the material in question, or to minimise the energy required to move the material. It should also be appreciated that the materials to be moved which are under consideration in the present invention can be a solid, liquid or gas.

Many forms of mass transfer utilise a conduit to guide the material and ensure that no material is lost during transport. As well-known examples of this are the domestic water supply, oil pipelines, gas supply pipes etc. In addition, in the medical field, conduits such as stents are used to aid fluid flow around the body and reduce the load placed on organs such as the heart. A further technical area which involves transporting a particulate solid along a conduit, is blasting, for example to clean a surface. The particulate solid is forced along and out of the conduit, usually through a nozzle, by means of a liquid or gas carrier material and against the surface, the impact causing the surface layer to be abraded.

In the above applications, the flow of the material within the conduit is important. Interactions between individual constituents of the material and also between the material and the wall of the conduit can lead to energy losses, not least because of turbulent flow occurring. If the turbulence can be reduced therefore, then the reduction of momentum of the material is lessened, flow is faster and the energy required to transport the material decreased.

When dealing with blasting, one area of blasting which has of itself received much attention is the nozzle. Adaptations to the length and the internal configuration have been made to influence the spray pattern emerging from the nozzle. However, amending the flow of material before the material reaches the nozzle has received less attention.

US4314587 discloses a tube, having ribbing to affect fluid flow through a boiler tube. US1451272 discloses ribs within a pipe, having bevelled edges to prevent unwanted lodgement of a solid material flowing within the pipe of a hydraulic dredging machine. The present invention seeks to address the above problems and provide a more cost effective means of improving the flow of materials within a conduit and also to improve the flow as the material exits the conduit, for example from certain types of nozzles. The speed with which a material flows can therefore, for example, be increased or can be made more ordered thus saving transport energy. Moreover the time required when using blasting techniques to clean a particular surface is reduced which represents a cost saving in terms of labour and blast media, along with wear and tear to any nozzle used.

It will be understood that within the description, fluid flow can refer to the flow of a particulate solid, or of a liquid or a gas.

### Summary of the Invention

According to a first aspect of the invention there is provided a device as defined in claim 1.

The or each helical profiled portions imparts a component about the axis of the main tubular member to the flow of the material which enhances the overall flow of material.

Optionally, the or each helical profiled portion extends from 0.60cm (0.25 inches) to 1.10cm (0.43 inches) into the cylindrical fluid path of the tubular member.

Preferably, the helical profiled portion describes a turn from 180° to 900° along the length of the tubular member and especially preferably a turn from 360° to 720° to impart sufficient motion about the main axis of the tubular member to the fluid.

Optionally the insert includes two parallel identical helical profiled portions offset axially from one another to introduce a stronger radial component and reduce turbulent flow. According to a second aspect of the invention there is provided a conduit including a device as herein described.

According to a third aspect of the invention there is provided a method of transporting a material through a conduit, the fluid path including a device in accordance with the invention.

### Brief Description of the Drawings

The invention is now described with reference to the accompanying drawings which show by way of example only embodiments of an attachment or insert. In the drawings:

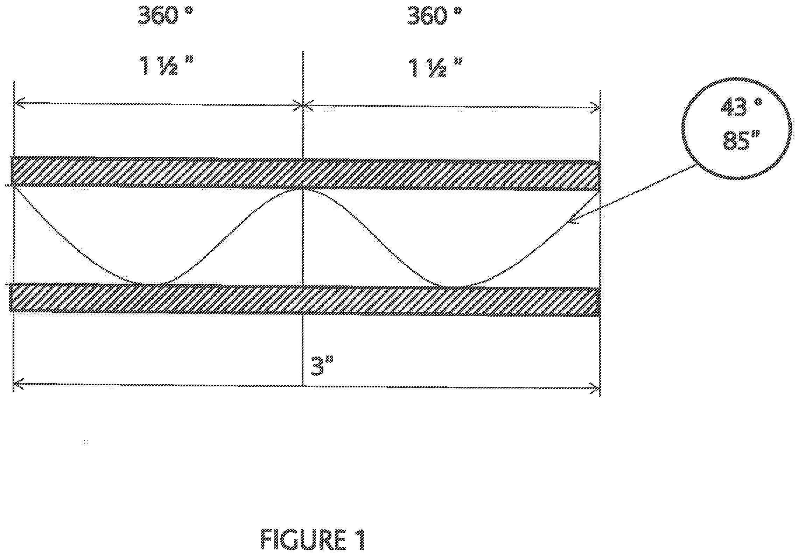

Figure 1 is an illustrative cross-section showing the helix within a first embodiment of an insert according to the invention;
Figure 2 shows a section through an insert in accordance with the current invention;
Figure 3 is a perspective view of a second insert not according to the present invention; and
Figures 4a, 4b are, respectively, an end view of the insert of figure 3 and a section through A-A of that end-view.

### Detailed Description of the Invention

In order to manufacture the insert device, a 7.6cm (3 inch) solid brass bar having a 2.5cm (1 inch) diameter was taken. Although the insert device described herein is made of brass, other materials such as metals, plastics or ceramics known in the art can also be used. Along the main axis of the bar, a 1.6cm (5/8 inches) hole was drilled through the 7.6cm (3 inch) length of the bar, to form an internal cylinder along the length of the bar. The 1.6cm (5/8 inches) hole enabled a cutting tool to be passed therethrough, to cut a raised helix on the interior surface of the internal cylinder within the bar, carving away all but the helix formation. One or both of the ends of the internal cylinder can be provided with a conventional thread to allow the device to be couple to a main conduit for fluid flow or to a nozzle.

The blade on the cutting tool which was driven by a lathe was set at a 45 degree pitch. In one embodiment a blade measurement on the helix of 1.9cm (0.75 inches) from the interior wall of the bar was used, and in a second a measurement of 2.2cm (0.85 inches). The blade measurement of 1.9cm (0.75 inches) gives the height of the blade at any given point from the interior wall of the pipe. The 2.2cm (0.85 inches) blade therefore provided a helical portion having greater height than that provided by the 1.9cm (0.75 inches) blade.

The blade was used to cut a helix in which the cross-sectional profile of the raised helical portions was approximately trapezoidal.

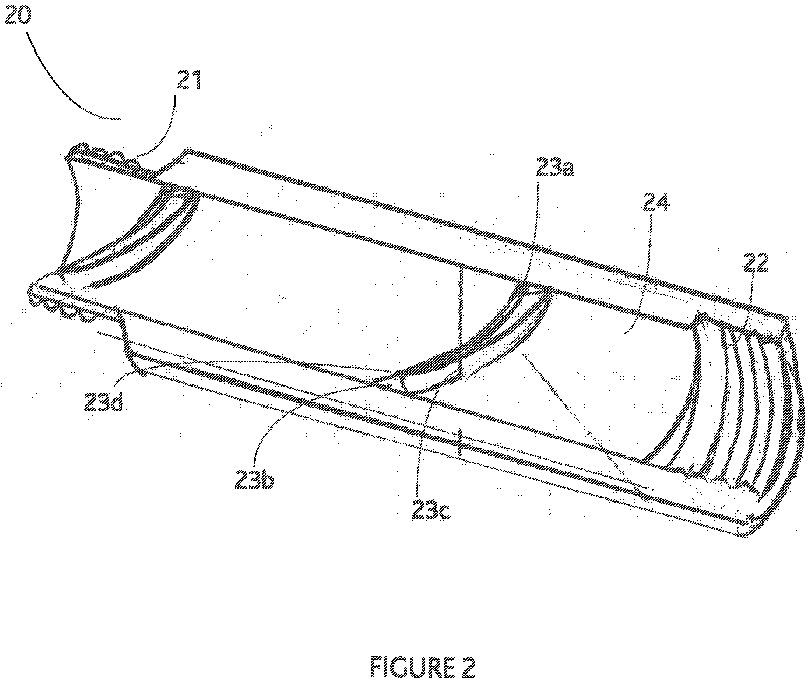

In Figure 2, can be seen an internal view of a generally tubular insert 20. The insert 20 has a first external thread 21 and a second internal thread 22. The threads 21, 22 are intended to enable the insert 20 to be secured within a longer conduit within which fluid is flowing. It is intended that flow of fluid will be preferably be in one direction through the insert 20: that is from the thread 21 towards the thread 22. It is intended that the diameter of the internal cylinder match as closely as possible to that of the main conduit into which the insert is included.

The insert 20 has a raised helical portion 23 extending into the internal volume of the insert 20. As can be seen, the helical portion 23 is defined by two parallel edges 23a, 23b. A further trailing edge, 23c is perpendicular to the main axis of the insert 20. The fourth edge 23d is at a reflex angle with respect to the main internal surface 24 of the insert 20. As the fluid moves along the insert 20 therefore, the fluid encounters the sloping leading edge 23d rather than the perpendicular trailing edge 23c. Fluid flow is therefore not disrupted, leading to turbulent flow, as much as it would, were the perpendicular edge to be the leading edge.

In use therefore, as the fluid flows through the insert 20, it encounters the sloping edge 23d of the helical portion 23. A velocity component about the main axis of the insert 20 is therefore imparted to the fluid which component persists along the length of the insert 20 and beyond along the main conduit. Without being bound by theory, it is believed that this imparted velocity component enables the improved flow of the fluid.

In subsequent tests, the insert which was cut using the 2.2cm (0.85 inches) blade provided increased flow.

Working with metal materials results in a problem in that by putting the 1.6cm (5/8 inch) hole in the centre to begin, a sacrifice of blade size is made. It is envisaged that working with other materials such as a plastics material will allow a smaller hole to be initially drilled than is the case with a metal. This allows, in turn, a greater blade size to be used for the subsequent cutting of the helical portion and providing increased flow. Using a softer material, allows the use of a smaller tool to cut the interior surfaces.

Without being bound by theory, using the above, material in one of the three states of matter of solid, liquid or gas are expected to behave in the following way. For gas, the largest blade will be able to be used, for a liquid a smaller blade, and for a solid a yet smaller blade to increase flow. With this theory, the device will increase flow and can be applied to all sizes of pipe.

The above described helix has been introduced into a 7.5cm (3 inches) length of pipe which is to form an insert, with two 360 degree turns of the helix formation achieved within the 7.5cm (3.0") length. To clarify, each full revolution uses 3.8cm (1.5 inches) of length inside the bar. The two revolutions on the interior of the pipe are of a single continuous helix.

In an alternative embodiment, not illustrated, the helix completes only one 360 degree turn along the length of the final insert, which is suitable for many applications. A further embodiment, also not illustrated has two continuous and parallel helices which can produce a tighter flow pattern. It is important that the insert not include two helices of different pitches these can then act to cancel each other out. Similarly a cancelling effect can be observed when two inserts are included within the same conduit, even if they have identical helices.

In a yet further unillustrated embodiment, two parallel and identical helices can be incorporated, axially offset from one another. Without being bound by theory it is believed that the two helices combine to introduce a more compact flow along the conduit.

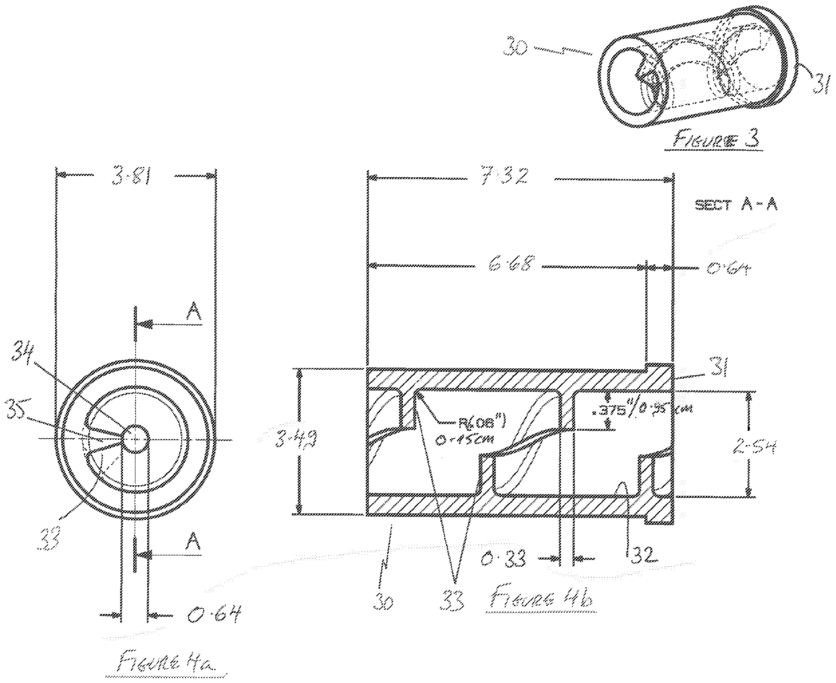

In figures 3 and 4 is shown an insert 30 not displaying a helical portion having a leading edge and a trailing edge in accordance with the invention Although internally, the insert 30 has a structure in accordance with the first embodiment, the outer surface includes a flange 31 enabling the insert 30 to be pushed into and to seat more firmly inside a conduit. In a further aspect, not illustrated with respect to the second embodiment, the outer surface of the flange can be threaded to facilitate coupling with other elements, such as a further conduit, or a blasting machine.

The insert 30 is generally tubular having an internal diameter of approximately 2.5cm (1.0") and an external diameter of 3.5cm (1.37"), thus giving a wall thickness of 0.5cm (0-2"). An integral flange 31 of axial length 0.64cm and external diameter 3.81cm is included at one end of the insert 30.

Extending inwardly from the inner surface 32 of the insert 30, is a helix 33. The height of the helix is 0.95cm which means that only the portion of the fluid moving along the central region 34 of width 0.64cm (0.25") would not directly impact the helix 33. Said height will depend on the internal diameter of the insert but will typically be of the order of from 0.60cm to 1.10cm. It will be recognised however that the flow of fluid impacting the helix 33 as the fluid moves through the insert 30 would certainly affect the central fluid portion. In order to give reasonable wear resistance and the capability of withstanding pressurised fluid flow, the helix 33 has a thickness of 0.33cm (0.13").

Additionally, the cross-section 35 of the helix 33 (see figure 4a) is of frusto-conical shape to provide better flow characteristics, although other quadrilateral cross-sections such as square or rectangular can be used as well as curved cross-sections to induce a smoother laminar flow on the microscale in the region of the surface 23a of Figure 2.

In use therefore, the user who wishes to improve the flow characteristics within a particular conduit selects the place within the conduit where an insert should be provided. Where use of an insert is frequent, then permanent connection means can be included as part of the conduit. For example, a conduit can include along its length coupling means connectable to an insert. This can be in the form of a threaded portion to engage a corresponding threaded portion on the insert.

Alternatively, a simple push-fit connection may be suitable for certain uses, particularly where lower pressures are utilised. As a further alternative, the insert can have an outer threaded surface which thread is able to cut into the internal surface of the conduit as the insert is twisted into position. Other coupling means known in the art can also be utilised.

It has surprisingly been found that even if the insert is, for example, not directly preceding the outlet in the flow path of a conduit, improved flow can be obtained. It has been observed using water flowing along a conduit of 20 millimetres in diameter formed of a plastics material under a pressure of 3.5 bar that an improved flow wave persists several metres from the insert causing the improved flow wave.

Utilising the insert herein described can improve the blasting process as outlined above. It has been noted that the insert provides a wider spray pattern out of the nozzle than would be the case without the nozzle which can speed up the cleaning of a surface. A similar effect can increase the efficiency of nozzles used in paint spraying or irrigation.

As additional uses, the motion induced in the flow can also result in fewer blockages occurring within a pipe; one reason for this being that solid material is less likely to settle in the pipe. Also, improved heating or cooling can be achieved as fluid is pushed to the outer regions of the pipe by the radial motion and so comes into contact with the wall of the pipe enabling more efficient heat transfer across that wall.

It will of course be understood that the invention is not limited to the specific details described herein, which are given by way of example only, and that various modifications and alterations are possible within the scope of the invention.

## Claims

1. A device (20) insertable into a conduit, such as a pipe, for guiding fluid flow of a material, said device (20) comprising a tubular member having an inlet and an outlet and defining a cylindrical fluid path therebetween, enabling fluid to flow through the device (20); an internal surface (24) of the tubular member including one or more profiled portions (23) extending helically along the internal surface (24) and radially inwardly from the internal surface (24), wherein the or each profiled portion (23) has a trapezoidal cross-section, wherein a sloping leading edge (23d) of the or each profiled portion (23) describes a reflex angle with the internal surface (24) of the tubular member to reduce turbulent flow, and a trailing edge (23c) of the or each profiled portion (23) is perpendicular to the internal surface (24) of the tubular member.

2. A device according to Claim 1, wherein the or each profiled portion (23) extends from 0.60cm to 1.10cm into the cylindrical fluid path of the tubular member.

3. A device according to any preceding claim, wherein the helically extending profiled portion (23) describes a turn from 180° to 900° along the length of the tubular member.

4. A device according to Claim 3 wherein the helically extending profiled portion (23) describes a turn from 360° to 720°.

5. A device according to any preceding claim including two parallel identical helically extending profiled portions (23) offset axially from one another.

6. A conduit including a device in accordance with Claims 1 to 5.

7. A method of transporting a fluid material through a conduit, the fluid path through the conduit including a device (20) in accordance with claims 1 to 5.

## Patentansprüche

1. Vorrichtung (20), die in einen Kanal, wie beispielweise ein Rohr, einführbar ist, um den Fluidstrom eines Materials zu lenken, wobei die Vorrichtung (20) ein röhrenförmiges Element umfasst, das einen Einlass und einen Auslass aufweist und zwischen diesen einen zylindrischen Fluidweg definiert, wodurch es Fluid ermöglicht wird, durch die Vorrichtung (20) hindurch zu strömen;
wobei eine innere Oberfläche (24) des röhrenförmigen Elements eine oder mehrere profilierte Abschnitte (23) enthält, der bzw. die spiralförmig entlang der inneren Oberfläche (24) und ausgehend von der inneren Oberfläche (24) radial nach innen verläuft bzw. verlaufen,
wobei der oder jeder profilierte Abschnitt (23) einen trapezförmigen Querschnitt aufweist, wobei eine schräge Vorderkante (23d) des oder jedes profilierten Abschnitts (23) einen überstumpfen Winkel mit der inneren Oberfläche (24) des röhrenförmigen Elements beschreibt, um turbulente Strömung zu verringern, und eine Hinterkante (23c) des oder jedes profilierten Abschnitts (23) senkrecht zu der inneren Oberfläche (24) des röhrenförmigen Elements ist.

2. Vorrichtung nach Anspruch 1, wobei der oder jeder profilierte Abschnitt (23) von 0,60 cm bis 1,10 cm in den zylindrischen Fluidweg des röhrenförmigen Elements hinein verläuft.

3. Vorrichtung nach einem der vorstehenden Ansprüche, wobei der spiralförmig verlaufende profilierte Abschnitt (23) eine Drehung von 180 ° bis 900 ° entlang der Länge des röhrenförmigen Elements beschreibt.

4. Vorrichtung nach Anspruch 3, wobei der spiralförmig verlaufende profilierte Abschnitt (23) eine Drehung von 360 ° bis 720 ° beschreibt.

5. Vorrichtung nach einem der vorstehenden Ansprüche, die zwei parallele identische spiralförmig verlaufende profilierte Abschnitte (23) enthält, welche axial zueinander versetzt sind.

6. Kanal, der eine Vorrichtung nach den Ansprüchen 1 bis 5 enthält.

7. Verfahren zum Transportieren eines Fluidmaterials durch einen Kanal, wobei der Fluidweg durch den Kanal eine Vorrichtung (20) nach den Ansprüchen 1 bis 5 enthält.

## Revendications

1. Un dispositif (20) insérable dans un conduit, tel qu'un tuyau, pour guider l'écoulement fluide d'un matériau, ledit dispositif (20) comprenant un élément tubulaire ayant une entrée et une sortie et définissant un trajet de fluide cylindrique entre celles-ci, permettant à du fluide de s'écouler à travers le dispositif (20) ;
une surface interne (24) de l'élément tubulaire incluant une ou plusieurs parties profilées (23) s'étendant de manière hélicoïdale le long de la surface interne (24) et radialement vers l'intérieur à partir de la surface interne (24), dans lequel la ou chaque partie profilée (23) a une section transversale trapézoïdale, dans lequel un bord d'attaque incliné (23d) de la ou de chaque partie profilée (23) décrit un angle réfléchi par rapport à la surface interne (24) de l'élément tubulaire pour réduire un écoulement turbulent, et un bord de fuite (23c) de la ou de chaque partie profilée (23) est perpendiculaire à la surface interne (24) de l'élément tubulaire.

2. Un dispositif selon la revendication 1, dans lequel la ou chaque partie profilée (23) s'étend de 0,60 cm à 1,10 cm dans le trajet de fluide cylindrique de l'élément tubulaire.

3. Un dispositif selon n'importe quelle revendication précédente, dans lequel la partie profilée s'étendant de manière hélicoïdale (23) décrit un tour allant de 180° à 900° le long de la longueur de l'élément tubulaire.

4. Un dispositif selon la revendication 3 dans lequel la partie profilée s'étendant de manière hélicoïdale (23) décrit un tour allant de 360° à 720°.

5. Un dispositif selon n'importe quelle revendication précédente incluant deux parties profilées s'étendant de manière hélicoïdale identiques parallèles (23) décalées axialement l'une par rapport à l'autre.

6. Un conduit incluant un dispositif conformément aux revendications 1 à 5.

7. Un procédé de transport d'un matériau fluide à travers un conduit, le trajet de fluide à travers le conduit incluant un dispositif (20) conformément aux revendications 1 à 5.
